(19) **Europäisches Patentamt**
**European Patent Office**
**Office européen des brevets**

(11) **EP 1 423 923 B1**

(12) **EUROPEAN PATENT SPECIFICATION**

(45) Date of publication and mention
of the grant of the patent:
**11.05.2005 Bulletin 2005/19**

(51) Int Cl.⁷: **H04B 3/14**

(86) International application number:
**PCT/IB2002/003542**

(21) Application number: **02758748.4**

(22) Date of filing: **28.08.2002**

(87) International publication number:
**WO 2003/019810 (06.03.2003 Gazette 2003/10)**

(54) **ADAPTIVE EQUALIZER FOR REDUCING DISTORTION IN A COMMUNICATION CHANNEL**

ADAPTIVER ENTZERRERER ZUR VERZERRUNGSVERMINDERUNG IN EINEM KOMMUNIKSTIONSKANAL

EGALISATEUR ADAPTATIF PERMETTANT DE REDUIRE LA DISTORSION DANS UN CANAL DE COMMUNICATION

(84) Designated Contracting States:
**DE GB**

(30) Priority: **28.08.2001 US 315907 P**

(43) Date of publication of application:
**02.06.2004 Bulletin 2004/23**

(73) Proprietor: **Acuid Corporation (Guernsey)
Limited
St. Peter Port, Guernsey GY1 4HP (GB)**

(72) Inventors:
• **ABROSIMOV, Igor, Anatolievich
190000 Saint Petersburg (RU)**
• **ATYUNIN, Vasily, Grigorievich
190000 Saint Petersburg (RU)**
• **DEAS, Alexander, Roger
Edinburgh, Central Scotland EH22 1ST (GB)**

(56) References cited:
**US-A- 3 824 501          US-A- 4 759 035**

## Description

TECHNICAL FIELD

The present invention relates to a means for reducing distortion in communication channels and compensating deterioration of signals over transmission lines of communication systems, and in particular, to a means for detecting characteristics of transmission lines and determine dynamically the nature and amount of equalisation required to correct a communication channel and then apply this correction to enable equalisation without significant additional latency to operate on either end of a channel, across a variety of arc/hitectures such as point to point, a single transmitter with multiple receivers or a bus with multiple drivers and receivers.

BACKGROUND OF THE INVENTION

The concept of equalising a signal travelling through a transmitter into a transmission medium has a long history, going back to fundamental control theory, sonar devices and radar. In sonar systems, the ideal signal sent from the transducer should be a very short impulse. However, if one applies an impulse to a sonar transducer, it will ring, which has the effect of broadening the pulse. The transmission medium, such as water, further broadens the signal. To correct for this engineers have, for at least three decades, implemented equalisation of the communication channel comprising transducer and transmission medium by determining the filter characteristic of the system and then applying an inverse filter to the signal before it is applied to the transducer. This equalisation can be either finite or infinite in their filter response. The end result is a clear sonar image, with the transmitter acting as if it has a higher bandwidth than is the case.

Signals travelling through any transmission medium are subject to filter effects, and this includes electronic signals, and even optical signals. For example, an electronic signal travelling down a 12,7 cm (5''') stripline is subject to skin effect attenuation which imposes an additional line resistance equal to $4.1 \times \sqrt{f}/5$ in copper. An engineer would normally compensate for this effect in a very high speed system by applying compensation to the signal being transmitted using a matching or equalising filter. For example, Dally, Poulten and Tell describe in their paper under DARPA Contract DABT63-96-C0039, entitled Multi-gigabit signaling with CMOS, 12 May 1997, how they implement such an equalisation scheme using a 5 tap FIR or a 5 tap transition filter. Yang, Lin and Ke describe a similar equalisation scheme in "A Scalable 32Gb/s Parallel Data Transceiver with On-chip Timing Calibration Circuits", 8 February 2000, ISSC 2000. Chadwick in US Patent 5,557,640 describes a system for equalisation based on static or predefined measurement of the amplitude and phase response of the channel and then compensation using various amplifiers.

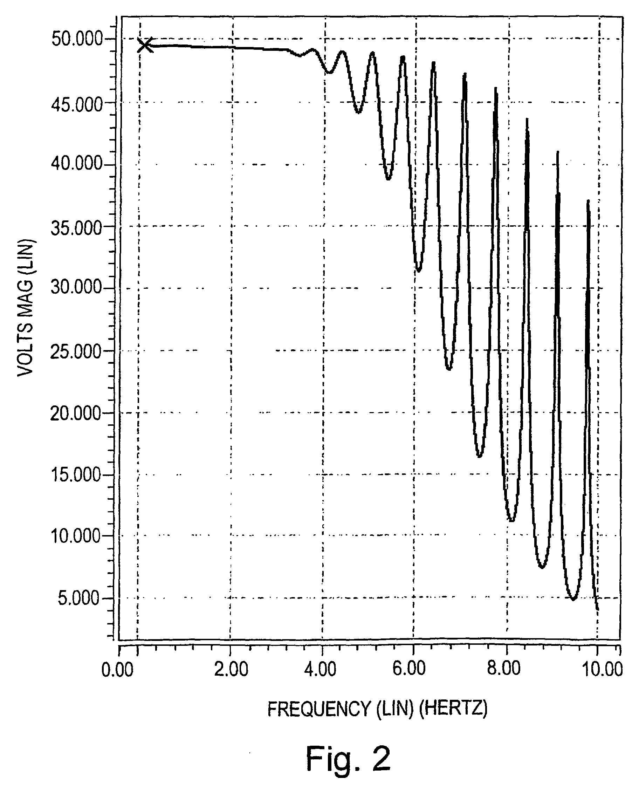

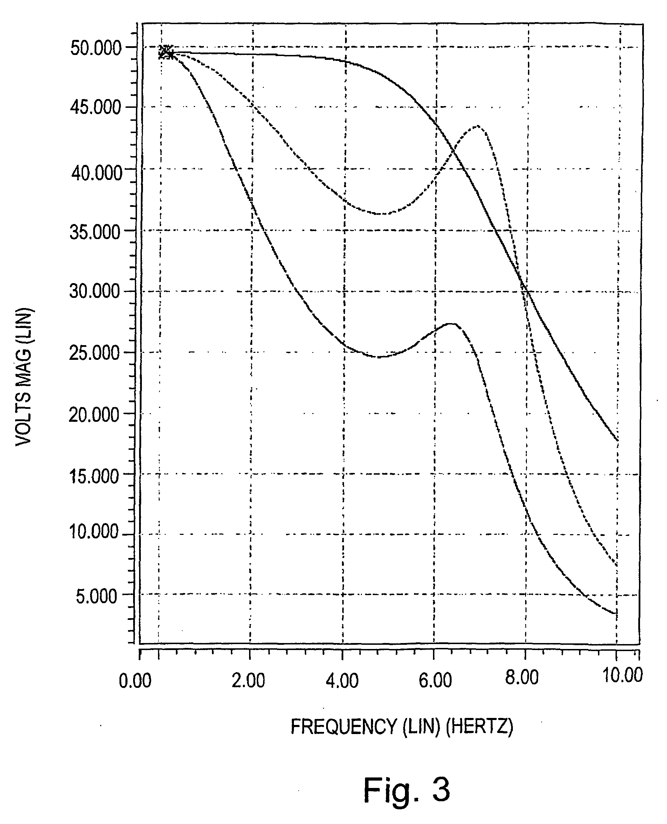

Equalising the skin effect is not sufficient for very high speed systems, particularly on short links running at more than 2GHz. Fig.2 shows the amplitude frequency response in mV on the Y axis (0 to 50mV), and frequency in the X axis (0 to 10GHz) of a channel comprising a pad connected using a Chip Scale Package (CSP) with the lowest available package parasitics (2nH, 0.6pF, negligible R), without any ESD structures, driving a 100mm long transmission line into the pad of another device packaged in the same manner. Fig. 3 shows the same channel but with the reflected components removed from the driver end by eliminating the driver package parasitics, and with three curves representing different ESD structures on the driver, from no ESD to a B Class (Human Body Model) structure. In Fig. 2 and Fig. 3, both pads are perfectly terminated inside the chip to the line using an ideal resistor.

From Figures 2 and 3, a number of effects are apparent:

1. Ringing occurs due to the standing waves that occur as a result of the reflection from the discontinuities caused by package parasitics and other line discontinuities such as connectors or vias.
2. The reactance formed by the combined capacitance and inductance of the package dominates over skin effect above 6GHz for short lines: for a line 100mm long, the skin effect loss is around 2% at 10GHz whereas the package parasitics even in a modern CSP or BGA package attenuate the signal by around 70% - with other package types the loss is even greater. This illustrates how skin effect is of minor consequence for short lines, such as in chip to chip interconnect, although for very long lines the skin effect can be considerable.
3. The ESD structures required on the pads for reliable manufacture impose up to 2pF of additional capacitance. This capacitance causes the amplitude frequency response to take on a more complex characteristic.
4. Multidrop configurations, sending the signal via connectors, or even changing layers on a pcb, all adds to the resonance modes creating a complex profile well beyond the limits of what predefined equalisation can compensate for.

Predefined equalisation, that is using predetermined filter coefficients, make inherent assumptions about the line lengths, thickness, the dielectric parameters and other information which varies from application to application. Another weakness of the prior art is that the equalisation is applied at the transmitter, which assumes a single transmitter and single receiver architecture: this is impractical for real electronic systems which require multiple receivers as a minimum.

An alternative or complementary aspect of this equalisation problem in a dynamic environment is noise. This has both pink component, where the amplitude per octave reduces with increasing frequency, and a component which is self induced or comes from electrical noise elsewhere in the system or the environment. The present invention can be applied to reduce this noise, by moving the signal out of regions of the spectrum where there is a deleterious noise component.

Equalisation at the driver end of a channel has the obvious benefits of improving the signal to noise ratio at the receiver end. In a multidrop environment, additional equalisation at each receiver is the best solution, but the problem then becomes one of how to determine how much equalisation to place where in the system. Solving this problem requires the ability to measure the parameters of the system, in effect a calibration of the channel, then loading appropriate values into integrated filter components such as variable resistors (MOSFETs) and variable capacitors (varicap diodes).

Another role of equalisation is to adapt the response of the channel to maximise the transfer function for the desired signal and to minimise the transmission response for noise. Digital signaling systems adopt a voltage or current level to be a logical state, and establish the gap between each of the states such that noise does not corrupt the digital value. For example, in a binary system a logical 0 may be specified as a voltage less than 0.8V and a logical 1 as a voltage above 1.6V: in this case the noise margin is 0.8V. In four level system, there would be four voltage or current levels, typically with 200mV between states. If the noise in the system can be reduced, then either more states can be established such that more data is sent on every data transition, or the system could operate with lower voltages or currents, saving power for a given slew rate of the driver.

An adaptive equaliser described in US 3,824,501 comprises an active filter having adjustable gain factor, a detection means for generating a control signal responsive to the peak signal level of the output signal, a means for adjusting said gain factor based on control signal. According to US 3,824,501, a decision region, i.e. the "eye opening" of the eye diagram shown in Fig.1 is defined as the difference between the maximum peak and the minimum peak.

However, prior art equalisation solutions based on the above approach have several drawbacks. Typically, they use an amplitude criterion for adapting the filter, i.e. they examine amplitude differences and generates an error signal based upon them. In practice, the amplitude of the signal varies greatly that causes problems with transition detection and finding optimal compensation.

Another approach to compensating signal distortion in transmission lines is the maximum likelihood sequence estimation equalisers, such as described in US 6,349,112. However, in this approach, wave components outside of the estimated region are not compensated by the equaliser, so that jitter such as caused by package parasitics, line discontinuities, skin effects, and non-linear dielectric constants may still be present.

Still another approach is using jitter as the equalisation criterion. Jitter is determined for the filtered signal, and the frequency response of the transfer function is varied accordingly by applying a digital adjustment signal to the transfer function structure. For example, an adaptive equalizer according to US 5,991,339 has a digital feedback control using jitter as the adjustment criteria.

However, this approach requires digital signal sampling between eight and twelve times the transmitted data rate, or more. Such a high sampling rate makes this method difficult to apply in high speed applications. Further, the judgement on whether compensation is needed is based on detecting a single symbol error that leaves the whole pattern outside the consideration. Furthermore, the adaptive equaliser according to US 5,991,339 requires using a clock and data recovery unit which, due to its slow operation, leaves high frequency noise uncompensated.

OBJECT OF THE INVENTION

The first object of the present invention is to provide an adaptive equalisation system that would overcome the deficiencies of the prior art and make corrections for deviations from ideal behaviour in a transmission medium or channel, such as caused by package parasitics, line discontinuities, skin effects, and non-linear dielectric constants, such that a higher data rate can be communicated across the medium with less amount of time and computation but still greater accuracy and reliability.

The present invention is adaptive in that it measures artifacts of a signal transmitted through the medium by taking a series of samples, averaging the noise for each set of samples based on minimal BER (Bit Error Rate) approach, creating a full digital representation of the received signal and then adapting one or more filters to minimise the magnitude of those artifacts. The above mentioned technique of estimating BER is described in the US application No. 10/038,868 entitled "Receiver With Automatic Skew Compensation" filed by the same applicants. According to this technique, the width of the eye diagram is measured directly, while there is no need in using clock and data recovery unit, metastable states are avoided, while transmitted data are latched at the moment when signal has the maximal stability.

The benefit of this aspect of the current invention is to allow an increase in the maximum data rate.

A second object of the present invention is to reduce the noise component from the signal such that the size of the voltage or current swing in transmitting a 1 or a 0 can be reduced, and that the noise generated by the system is also reduced.

SUMMARY OF THE INVENTION

In one aspect of the invention, an adaptive equaliser is provided for a communication channel comprising at least one driver for transmitting a signal along the channel and at least one receiver, the adaptive equaliser comprising:

- a means for measuring the width of the eye opening in the eye diagram of the received signal by using a scanning means for scanning the signal at a variable voltage or current threshold; and
- a variable filter for modifying the signal, so that the filter parameters are adjusted based on the measured width of the eye opening of the received signal so that the signal characteristics are equalised within a required communication pass band.

Preferably, the adaptive equaliser uses the scanning means for scanning the signal at a variable voltage or current threshold to construct a digitised representation of the received signal, so that the filter parameters are adjusted based on this digital representation, however, other means for measuring the eye diagram are applicable as well.

The adaptive equaliser according to the invention automatically varies its characteristics as a function of the communication channel characteristics. An input signal carried by a transmission medium is provided to a variable filter whose characteristics are varied under feedback control. An output signal of the variable filter is input to a sampler. The specific feature of the sampler is that the signal is scanned at different voltage or current levels so as to construct a complete digital representation of the received signal. From the received signal, the distortion that the channel applies to the transmitted data is calculated.

The present invention measures the filter response of the communication channel, or artifacts related thereto by sampling a calibration waveform generated by the transmitter. It applies this information to establish the correct coefficients in an equalisation filter that compensates for the distortion of the channel. The equaliser produces an output signal that is optimized for any transmission medium within a required communication pass band.

The equalisation is applied first to the transmitter using the average signal distortion from a receiver, or all of the receivers, and then each receiver's equalisation is set up to tailor the equalisation to maximise the channel capacity for that receiver.

The present invention can include in the same or a connected equalisation filter, a high pass filter to a signal with means to ensure the signal exceeds the cut-off frequency, such as by encoding the data and its strobe.

BRIEF DESCRIPTION OF THE DRAWINGS

For a better understanding of the present invention and the advantages thereof and to show how the same may be carried into effect, reference will now be made, by way of example, without loss of generality, to the following description now taken in conjunction with the accompanying drawings in which:

Fig.1 is a schematic diagram of an example embodiment of a communication channel according to the invention.
Fig. 2 shows the amplitude frequency response of a channel comprising a pad connected using a Chip Scale Package driving a transmission line into the pad of another device packaged in the same manner.
Fig. 3 shows the same channel but with the reflected components removed from the driver end by eliminating the driver package parasitics.
Fig. 4 shows the received signal from a perfect step sent from the transmitter through a transmission medium including the ESD structures, package parasitic and a short line ideally terminated.
Fig. 5 illustrates the frequency response of a channel determined from the step reaction of the clean system.
Fig. 6 shows an extended frequency response of a channel determined from the step reaction of the clean system, which differs from Fig.5 only in scale.
Fig. 7 is an eye diagram illustrating the reduction of the available transmission channel bandwidth as a result of noise.
Fig 8a shows an example of a filter arrangement.
Fig 8b shows an example of a filter arrangement suitable for correction of the response of the clean system for data rates to 10GHz.

DETAILED DESCRIPTION OF THE INVENTION

The invention will now be described without limitation to the generality of the present invention with the aid of an example embodiment and accompanying drawings.

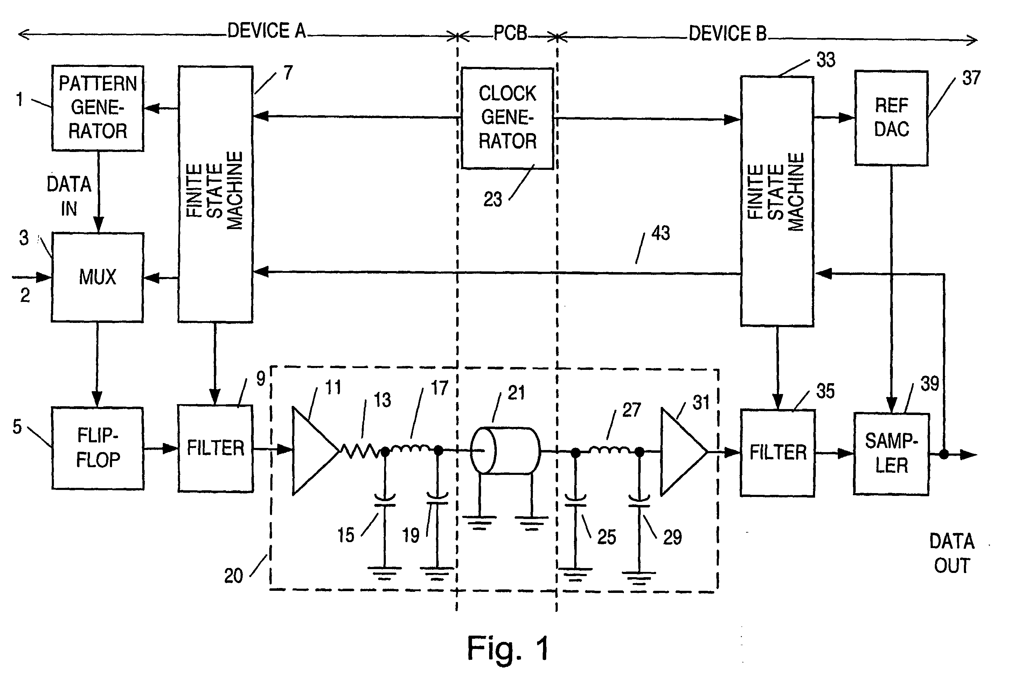

In Fig.1, a communication channel is shown comprising two devices, a transmitting device A and a receiving device B, connected via transmission lines, such as a set of traces on a printed circuit board. In Fig.1, just one bit of the communication channel is shown as transmission line 21 for the reasons of clarity, but normally, a plurality of bits are used to connect devices using a parallel bus structure. Device A comprises an input data stream 2, which can be routed via multiplexer 3 to a driving register, such as flip-flop 5, then through a filter 9 to a buffer 11 which drives the transmission line 21. The transmission channel as shown by reference number 20 and outlined by a dotted line comprises driver impedance 13 and 15, package parasitics 17 and 19, the transmission line 21 itself, into the receiver which also has package parasitics 25, 27 and 29. The signal is buffered and amplified on the receiving device B, by a buffer 31, then filtered by a filter 35, and the signal is sampled in a sampler 39 which implements the means for measuring the signal. According to the present example embodiment, the digital sampler 39 is a comparator with a flip flop, such as a flip flop with a differential input, where the incoming signal is compared to a reference level generated by a reference DAC (digital-to-analog converter) 37. A finite state machine 33 estimates the width of the eye opening based on information received from the sampler 39. The filter parameters, operation of the DAC and the protocol is controlled in the receiver by a control means, such as the same finite state machine 33 which may be implemented most easily using a micro-controller with associated ROM and RAM memory. The transmitting device A also has a state machine 7, which may be a micro-controller, which drives a pattern generator 1 to establish a data pattern during a calibration or setup phase for the channel, and this pattern can be switched into the channel during the calibration phase by means of the multiplexer 3. The entire system operates using a clock generator 23 which may be located anywhere in the system. Data on the captured signals are communicated back to the transmitting device A on return channel 43, which may be the same channel as used to transmit the original pattern running in the opposite direction, or a separate low speed link. During the phase when data on the sampled signal is being fed back to the transmitting device, the link can operate at a much slower speed than the link would normally operate after the equalisation processes described herein have been completed.

The operation of this system will now be described in detail.

The first step determines the characteristic of the transmission channel 20. To do this, a regular data pattern is generated by the pattern generator 1 and this is routed into the channel via the multiplexor 3 instead of the data stream, which is normally absent during this reset or startup phase of the system. The pattern is sampled by the receiver B to generate a representation of the received signal. To do this, the receiver takes a series of samples, average out the noise for each set of samples.

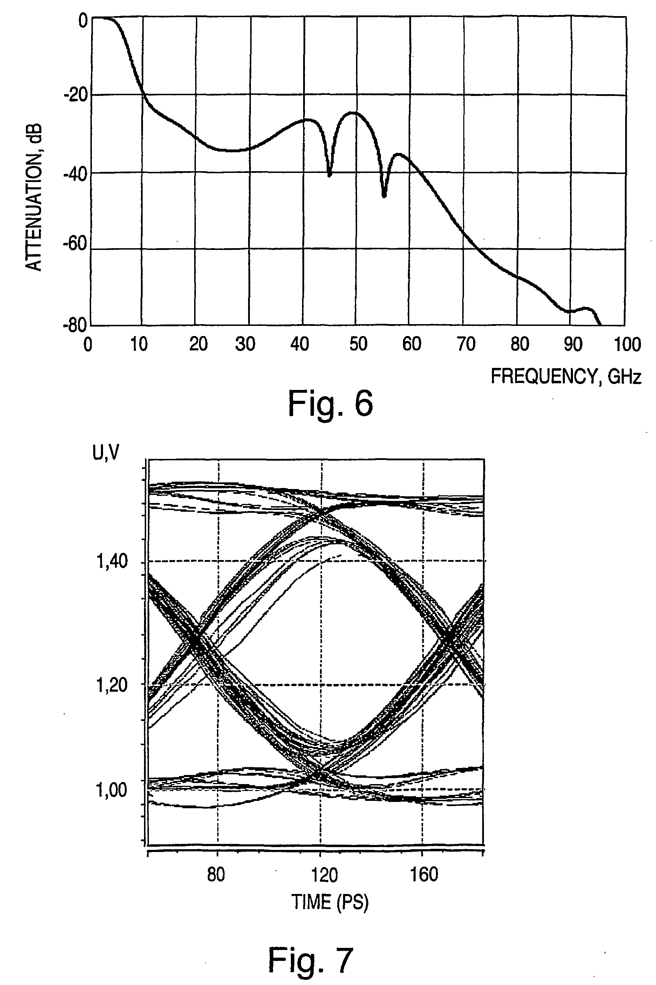

In a communication channel, the integrity of the received data can be observed using an eye diagram, such as in Fig. 7. The eye in the very centre is the region where the data is stable and is strobed. The eye diagram shows time in the X domain, in picoseconds in Fig. 7, and voltage or current in the Y domain, in mV in Fig.7. To receive data securely, it is necessary to sample the data (that is, close a gate in the time domain), with the switching threshold of the gate as close as possible to the centre of the eye. A technique for tracking the centre of the eye in the voltage or current domain is described in US patent application US 2003014683 A, published on January 16, 2003.

The problem addressed by the present invention arises in very high speed systems, where each signal can move in time due to changes in the environment, in addition to movement due to channel noise, as has been already considered.

Several techniques are known in the art to track and optimize the data sample position. These include integrating the eye pattern transitions over a longer period of time. Some clock sampling schemes use only an initial transition reference to prevent tracking the clock sample position into a less advantageous portion of the eye pattern.

However, very often, in particular, in high speed communications, such a synchronisation is not effective, while the Bit Error rate is defined by the current application system requirements. A special case of this applies to where a communication channel uses clock recovery, such as in US 5,991,339, where the clock is recovered from the signal, and this is used to latch the received data. This approach does, to a limited degree, reduce the effect of low frequency noise, such as environmental changes. However the problem with this approach is that the entire error in the clock recovery system or the phase detectors is added to the noise in the channel and for very high frequency applications, this inaccuracy becomes a significant problem.

To create a fast representation of the signal, the reference voltage may be swept during the sampling process. This process of sending a signal and then sampling the signal to create a representation of the signal is a common and widely known process used in oscilloscopes and other measurement equipment.

From the received signal, the distortion that the channel applies to the transmitted data is determined, and from this distortion, equalisation parameters are determined for the filters. The distortion that the channel applies to the signal is determined as a difference between the signal at the receiver and the signal that is transmitted into the channel. The means for measuring the received signal takes a series of successive samples of the received signal, determines the width of the eye opening, selects the sampling point as a point where the Bit Error Rate is minimal and estimates the distortion with reference to this sample as described in detail in US application US 2003014683 by the same applicant. The Bit Error Rate is calculated as a probability to sample wrong symbol in a series of symbols.

The process by which this is performed will be described in more detail, and in particular how the system is extended to accommodate multiple drivers or receivers, and to distribute filter parameters between the various filter elements in the different transmitters and receiving systems.

In a simple point to point system with excellent termination, correction for the distortion in the channel can be a simple matter of determining the time constant for a fast signal.

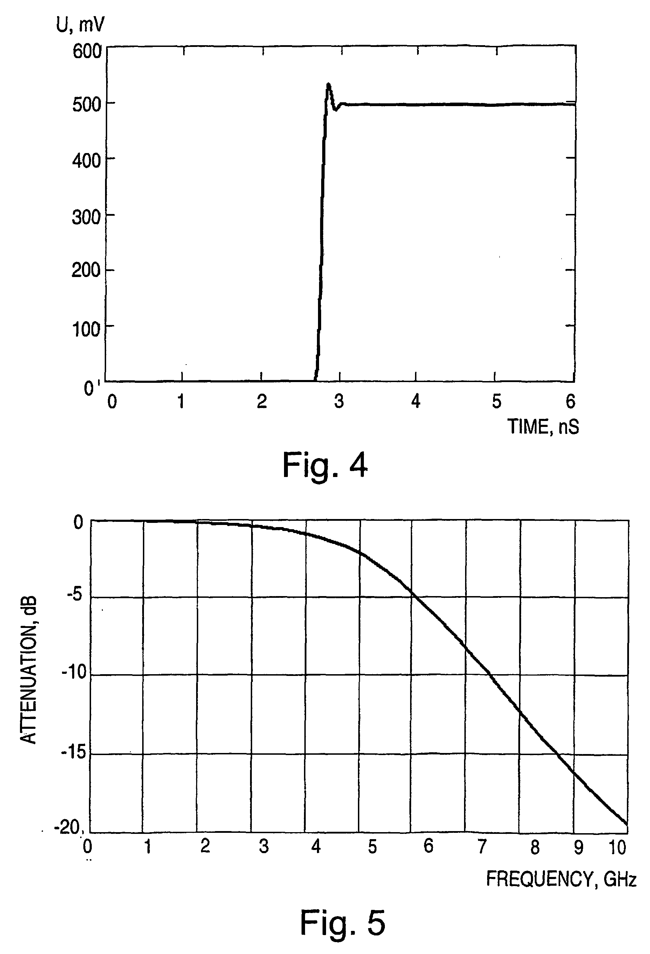

For example, Fig. 4 shows the received signal from a perfect step sent from the transmitter through a transmission medium including the ESD structures, package parasitic and a short line ideally terminated.

From the data shown in Fig. 4, the filter response of the transmission medium can be calculated as:

$$H(\omega) = i\omega \cdot \int_0^\infty S(t) \cdot e^{-i\omega t} dt$$

$$Ph(\omega) = \arg(H(\omega)) = -\frac{1}{\pi} \cdot \int_{-\infty}^\infty \frac{\ln(|H(\eta)|)}{\omega - \eta} d\eta$$

based on Laplace function and Hilbert transformation, respectively, as shall be evident for a specialist in the art.

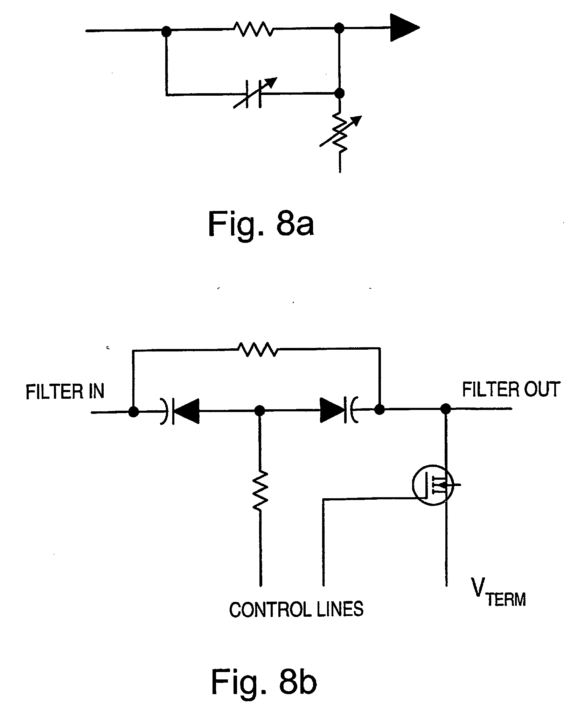

The response from this calculation can be seen as amplitude attenuation in Figs. 5 and 6, the two figures differing only in scale. A filter to correct this response can be implemented as a simple conventional RC filter as shown in Fig. 8a, or using the components and circuit shown in Fig. 8b, comprising a first order filter using elements easily fabricated in silicon. The characteristics of the components, such as R, C, can be determined by the same process as used to determine the frequency response of the system, to compensate for process variances.

A preferred process to establish the filter parameters is to iteratively load values, including R and C values, measure the response, such as voltage or current amplitude of the signal in the channel and tune the values as a function of the response. Normally, the procedure is to follow the gradient of the transfer function to find the optimal values, but in complex cases, a monte-carlo approach is necessary to find the optimal equalisation. The monte-carlo process can start with a seed value determined in during the design process, from initial device characterisation, or from saving the values of the previous calibration in the system. The amount of time needed to perform the calibration can be significant, therefore the expediency of saving the last values used, then loading these values as the initial state the next time the system is powered up, is evident and can greatly extend the utility of the present invention. The values can be stored in any form of non-volatile memory or memory with battery backup.

The monte-carlo approach resolves filter characteristics in realistic systems where the signal includes reflections. That is, in addition to frequency dependent effects such as Skin Effect Attenuation, the signal is modulated by reflections from nodes within the channel that are a function of the data previously sent down the channel and by parasitics in the driver and receiver packaging. It is impossible for a symbol received at a receiver to be affected by subsequent bits sent through the channel assuming the same rise time is used for all symbols transmitted, so only the static distortion of the channel and its historic content need be considered.

The process of determining the general filter type is normally performed during the design phase. This process is taught widely in universities and covered by a multitude of texts on Kalman filtering and digital signal processing.

To determine the impulse response of a channel, the transmitter on power up or at other times appropriate to the application, sends a regular signal at an intermediate frequency used within the channel. For example, a system with a 1MHz to 10GHz channel bandwidth operating with a copper transmission line 1m long, may send a 10MHz repetitive signal for this purpose. The receiver will lock onto this signal, and then take successive samples, moving the sample threshold voltage or current between groups of samples, to construct a digitised representation of the received signal. The receiver can then statically compute the filter required to convolve this signal to reconstruct the original repetitive signal. The constants for the filter to implement this inverse filtering operation can then be applied to a filter, with as many taps as necessary. The number of taps depends on the nature of the channel. For example, a simple point to point system with good termination may require only 3 taps in a transition filter to correct for skin effects but parasitics require many more taps. A channel with multiple reflective nodes and poor termination across branches of the channel, can require 9 more taps.

The high speed nature of applications of the present invention tends to preclude filter implementations involving amplifiers, and tends instead to implementations that attenuate the signal such that the overall transfer characteristic of the driver, transmission medium and receiver is flat in the passband of interest.

Another advantage of the present invention is that it minimises the computation required. Approaches such as measuring the actual amplitude - frequency response and phase-frequency response using swept signals, such as described by Chadwick in US patent 5,557,640 for application in RF systems, are entirely impractical in most digital systems due to their inability to generate sinusoidal signals and the difficulty in determining filter parameters directly from such data given the non-ideal nature of the filter components and process variations. The present invention avoids all need to calculate filter parameters from frequency domain data. The approach described herein uses a digital signal, which will have limitations in its rise and fall slew rates as well as other variations from the ideal, to tune the actual filter components to optimise the response, namely to improve the data bandwidth of the channel or intersymbol skew, or increasing the area in the eye diagram, or reducing settling time.

In the design process, it is necessary to design the nature of the filter. Information on this process is widely disseminated, but the outline of the process will be described here for the sake of completeness.

Fig.1 shows a driver, with the ability to apply a repetitive pulse train with each pulse of duration greater than the total settling time of the transmission medium, the ability to measure voltage using a time gate on a comparator to build up a representation of the signal as amplitude in time. The transmission channel characteristic is derived from this pulse train, treating the pulse as an integral of a Dirac impulse to a system convolved with the driver characteristic. The characterisation preferably includes the driver and other integrated semiconductor components, such as the preamplifier, ESD structure and receiver, as part of the overall channel response.

Each of the receivers applies a similar equalisation process while the driver is still generating the pulse train, but after a delay while the driver is performing its equalisation.

The duration of the pulse train is determined as a trade off of time against the quality of the equalisation: a long train allows more samples to be taken. The accuracy of measurement of a particular point is proportional to the square root of the number of samples.

Consider for example a system designed to operate at 10GHz, with a maximum length of the transmission line of 1m, with termination that requires up to 5 round trips to settle entirely. For shorter channels, compensation is required for more round trips, and longer channels fewer round trips because longer lines dissipate more of the reflected energy. A short 100mm channel may require 10 round trips to be considered. This 10GHz 1m long channel may be calibrated with a 10MHz pulse train. Assuming the pulse train has +/-25ps of jitter, then 625 samples are required per point to achieve 1ps resolution - another option is simply to measure the sample once but use interpolation to reconstruct the waveform by applying the sample points through a filter. If the characteristic is measured at 5ps intervals for 100ns (the 5 round trips, for each edge), requires a total of 12.5 million samples for each voltage point of the comparator.

The resolution of the comparator should not be less than the noise in the channel: if it is, then it is necessary to add artificial noise during the calibration process to allow points between the quantisation steps of the comparator to be resolved. The resolution of the comparator should preferably be matched to the resolution in the time domain of the sampling system over the period of the rise time. In this example, if the rise time is 40ps then with 5ps steps, the time data comprises 8 points over the rise time of the signal. For 8 voltage points, plus noise, suggests 16 voltage points need to be measured, to give a 4 bit result. The total time required for this channel, is thus 16 times 12.5x10^6, plus the settling time for moving the voltage steps 16 times unless a sloping reference algorithm is used. This gives a total driver calibration time for a 1m 10GHz channel of 20 seconds.

This calibration time can be reduced very substantially by various methods:

1. Better termination, reduces the number of round trips of the signal in the transmission, such as from 5 to 2.
2. Reducing phase noise, as this increases the number of samples required for each point, unlike the amplitude noise which can reduce the calibration time by improving the resolution of the comparator.
3. Measuring multiple points simultaneously. For example, 16 receivers spaced 1ps apart in time can take 16 measurements at the same time, but in this case the receiver spacing should be calibrated first which will add its own time component.
4. Reconstruction of the waveform from noisy temporal data by passing the data through a filter.
5. Overlapping the measurement of the channel characteristic: Instead of the driver end performing its equalisation first, then all the receivers performing their equalisation, the driver and receivers can take the measurements of the channel characteristic in parallel. That is, the driver sends the regular pulse train, the receivers sample the train and send the data back to the driver which averages the response. The receivers use the same samples to determine the response of the channel from the driver. When the drive has calculated the compensation it will apply, it can send this data to the receivers which can allow for the driver compensation in their calculation of the receiver equalisation.
6. Sweeping the reference voltage during the sampling process.

7. Picking particular points with respect to the signal edge and optimising the characterstic for those points, assuming that interstitial points are also improved.

These techniques together can give order of magnitude reductions in the amount of time needed for the calibration of the channel.

The exact characteristics of the filter is generally unknown at the start of the calibration process. This can require several iterations of the calibration process to produce the maximum degree of equalisation. Alternatively, if each part of the filter is separated such as by an amplifier, it is possible to calibrate each of the filter elements: when the filter elements are interconnected such as in a filter with 9 poles and zeros.

Adding voltage noise during calibration can reduce the total calibration time by allowing the number of passes to be reduced because the values can be averaged with a known noise characteristic.

We will now consider how a filter which corrects for intersymbol distortion such as from skin effects and discontinuities, can be extended to correct for noise which is external to the channel.

The received signal will include noise from adjacent channels, from power supplies, EMI, thermal noise and other sources. The noise voltage will tend to be asynchronous with the sampling process but give a window, which may be large, that effectively reduces the available transmission channel bandwidth as seen in an eye diagram such as in Fig. 7.

The signal in this modified implementation is modified to ensure it exceeds the cut off frequency of the filter, and the filter has a high pass response. Methods for doing this include Manchester encoding of the signal, or inverting both data and clock or data and a strobe signal, for example, if any signal in the 8 bit wide interface has more than 16 cycles in the same state, in this example, the clock and all the data would invert. The inversion can be detected by the receiver in that the clock received is entirely out of phase with the PLL. In another embodiment, a distinct line carrying a complement of the clock can be used to signal data inversion: for example the clock would run continuously as a differential pair, but when the clock has a data inversion, then one of the pair is inverted. A suitable receiver can then both receive the clock with the data and determine when to apply an inverse coding, in this case just by inverting the data.

The filter introduces a frequency dependent phase shift, or skew, on the incoming signal. The cut-off frequency is chosen such that the skew is within predetermined limits across the pass band of the filter. Alternative solutions such as a pattern dependent delay can be implemented by comparing for each data line the current data and n previous states with a register holding values that are applied to a vernier delay to create an inverse skew, such that the data is deskewed by the filter on arriving at the receiver, such as in US Patent Application US 2002051506-A, pulished on May 02, 2002.

Very high speed microcircuits and radio frequency transistors often carry little or no protection from electrostatic discharges (ESD). This makes these devices extremely difficult to use in either a research or a production environment. The problem is exacerbated by the very thin gate oxides of ultra high speed MOS devices, which can break down with voltages as low as 5V. Some filter implementations of the current invention alleviates this problem to a degree by removing all but the very fast edge of a discharge, reducing very substantially the energy to be absorbed by any protection circuitry on the microcircuit. The present invention compensates for the primary (capacitive) parasitic imposed by the ESD structure on the pad, allowing ESD structures to be present on the semiconductor devices without crippling deleterious effects on the channel capacity.

The amount of receiver hysteresis required in a system with background EMI can be determined by a calibration process, or a process of continuous feedback. In the simplest embodiment, the bit error rate (BER) of the link is measured for different levels of hysteresis, and the optimal level chosen: this is normally zero, but it is expedient in many circumstances to operate with a constant BER and adjust the hysteresis accordingly. After the level of hysteresis has been determined, it is necessary to vary either the slew rate such as by changing the current used to drive the system, or change the data rate. The system seeks to minimise both the hysteresis and the slew rate for minimising interference with other system parameters. A system with non-zero BER will normally require an error encoding and decoding system to detect for the presence of and remove noise artifacts within the signal.

Synchronous noise from other system components is preferably minimised by choosing parts with the slowest slew rates. Obviously, locating a block of logic using a logic family with a 100ps rise and fall time, will create substantial interference with a low swing system such as that described herein. Choice of a logic family with, for example, a 3ns slew rate to drive peripherals with the primary logic running at 100Gbps with the cut-off filter at even 10GHz, will minimise the amount of interference.

Information gathered by the receiver during the calibration phase of the channel can be communicated to the driver using either a separate low speed channel, or by using the primary channel working at a lower frequency, such as 133MHz.

In the present invention, reference is made to calibrating the driver. In practice it is not possible to separate the calibration of the driver from that of the channel and that of the receiver. The driver is compensated for the average response from the driver to the receivers, even though a large proportion of the channel distortion occurs not in the driver but in the transmission medium and in the combined receivers' package parasitics. Once the driver is equalised for this average response, the individual differences between the response of each receiver and this average response is then compensated in each of the receivers separately.

Channels with multiple drivers and multiple receivers can be calibrated by each of the drivers performing a calibration. This requires a number of calibration passes equal to the number of drivers, or an average driver response being determined from a sample of the drivers and this average channel response being equalised by all the drivers.

An equalisation process involves applying an approximation to the inverse of the channel response over the pass bandwidth. The filter components implement this inverse function, such that the data is applied to the filter, which amplifies, or at high frequencies more typically attenuates, the data signal such that the combination of the equalisation filter and the channel response is as flat as possible, except for in the case of the extended implementation of the present invention, low frequencies or frequencies in a noise spectrum are further attenuated.

It shall be appreciated also that other embodiments and modifications of the present invention are possible within the scope of the present invention.

**Claims**

1. An adaptive equaliser (7, 9, 11, 31, 35, 33) comprising a variable filter (9, 35) for modifying the signal, a means (39) for measuring the received signal and a control means (7, 33) for adjusting the filter (9, 35) parameters; wherein:

   the means (39) for measuring the received signal determines the width of the eye opening in the eye diagram of the received signal; and the filter (9, 35) parameters are adjusted by the control means (7, 33) based on the determined width of the eye diagram,

   **characterized in that** the width of the eye opening in the eye diagram of the received signal is measured by using a scanning means (37, 39) for comparing the signal with a variable voltage or current threshold.

2. An adaptive equaliser of claim 1, wherein the control means (7, 33) constructs a digitised representation of the received signal, the filter (9, 35) parameters being adjusted based on the constructed digitised representation.

3. An adaptive equaliser of claims 1 or 2, wherein the control means (7, 33) iteratively loads values of filter (9, 35) parameters and tunes the values as a function of the signal received to convolve the signal to reconstruct the input signal.

4. An adaptive equaliser of claim 3, wherein the control means (7, 33) performs iteration using monte-carlo approach to find an optimal equalisation.

5. An adaptive equaliser of claim 3, wherein the control means (7, 33) performs iteration by following the gradient of the transfer function of the filter.

6. An adaptive equaliser of any one of claims 1 to 4, wherein the means (39) for measuring the received signal takes a series of successive samples of the received signal and selects the sample point with minimal Bit Error Rate to construct a digitised representation of the received signal.

7. An adaptive equaliser of any one of claims 1 to 6, wherein amplitude noise or another signal is applied to the means (39) for measuring the signal to improve the resolution of measurements.

8. An adaptive equaliser of any one of claims 1 to 7, wherein the filter (9, 35) components are pre-calibrated.

9. A communication channel comprising at least one driver (11) for transmitting an input signal along the channel (21), at least one receiver (31) and an adaptive equaliser comprising a variable filter (9, 35) for modifying the signal, a means (39) for measuring the received signal and a control means (7, 33) for adjusting the filter (9, 35) parameters, **characterised in that** the equaliser is as claimed in any one of claims 1-8.

10. A channel of claim 9, wherein the filter (9, 35) components are integrated into both the transmitter (11) and the receiver (31).

**11.** A channel of any one of claims 9 to 10 wherein the chip on which the receiver (31) is located communicates measurements to the chip on which the driver (11) is located.

**12.** A communication channel of any one of claims 9 to 11, comprising a plurality of receivers (31), each receiver comprising the adaptive equaliser, wherein the filter (9) at the transmitter (11) is set to compensate for the average signal distortion at the receivers and the filters (35) in the receivers are set to compensate for the difference between the average signal at the receivers and the particular signal at each receiver.

**13.** A communication channel of any one of claims 9 to 12 further comprising a source of a signal, preferably noise, which is applied to the receiver (31) so as the resolution of a comparator performing voltage measurements is improved.

**14.** A channel of claim 13 wherein the receivers or comparators are offset in time or reference voltage.

**15.** A method of transmitting data along a communication channel comprising at least one driver (11) for transmitting a signal along the channel (21), at least one receiver and an adaptive equaliser, **characterised in that** the communication channel is as claimed in any one of claims 6-14.

**16.** A method for equalisation of characteristics of a communication channel (20), wherein the equalisation is performed by applying to the channel a calibration process comprising the steps of:

- driving a signal into the channel (20);

- applying a transfer function of a filter (9, 35) to the received signal to produce a filtered signal;

- measuring the width of the eye opening in the eye diagram of the received filtered signal;

- adjusting parameters of the transfer function in the filter (9, 35) to modify the signal based on the determined width of the eye opening,

- **characterised in that** the width of the eye opening in the eye diagram of the received filtered signal is measured by comparing the signal with a variable voltage or current threshold.

**17.** A method of claim 16, wherein the method is performed using an adaptive equaliser of any one of claims 1 to 8 or a communication channel of any one of claims 9 to 14.

**Patentansprüche**

**1.** Ein adaptiver Entzerrer (7, 9, 11, 31, 35, 33) mit einem variablen Filter (9, 35) zur Modifikation des Signals; einer Vorrichtung (39) zum Messen des empfangenen Signals; und einer Steuervorrichtung (7, 33) zur Einstellung der Parameter des Filters (9, 35), wobei:

die Vorrichtung (39) zur Messung des empfangenen Signals die Breite der Augenöffnung in dem Augendiagramm des empfangenen Signals bestimmt und die Parameter des Filters (9, 35) von der Steuervorrichtung (7, 33) auf der Grundlage der bestimmten Breite des Augendiagramms eingestellt werden,

**dadurch gekennzeichnet, daß** die Breite der Augenöffnung in dem Augendiagramm des empfangenen Signals unter Verwendung einer Abtastvorrichtung (37, 39) gemessen wird, um das Signal mit einer variablen Spannung oder einem Stromschwellenwert zu vergleichen.

**2.** Ein adapativer Entzerrer nach Anspruch 1, wobei die Steuervorrichtung (7, 33) eine digitalisierte Darstellung des empfangenen Signals errichtet, wobei die Parameter des Filters (9, 35) auf der Grundlage der errichteten digitalisierten Darstellung eingestellt werden.

**3.** Ein adapativer Entzerrer nach Anspruch 1 oder 2, wobei die Steuervorrichtung (7, 33) werte der Parameter des Filters (9, 35) iterativ lädt und die werte als Funktion des empfangenen Signals abstimmt, um das Signal zu rollen, so daß das Eingangssignal neu errichtet wird.

**4.** Ein adaptiver Entzerrer nach Anspruch 3, wobei die Steuervorrichtung (7, 33) eine Iteration unter Verwendung einer Monte Carlo-Annäherung durchführt, um eine optimale Entzerrung zu finden.

**5.** Ein adaptiver Entzerrer nach Anspruch 3, wobei die Steuervorrichtung (7, 33) eine Iteration durch Folgen des Gradienten der Übertragungsfunktion des Filters durchführt.

**6.** Ein adaptiver Entzerrer nach einem der Ansprüche 1 bis 4, wobei die Vorrichtung (39) zur Messung des empfangenen Signals eine Reihe von aufeinanderfolgenden Abtastungen des empfangenen Signals entnimmt und den Abstastpunkt mit minimaler Bitfehlerrate wählt, um eine digitalisierte Darstellung des empfangenen Signals zu errichten.

**7.** Ein adaptiver Entzerrer nach einem der Ansprüche 1 bis 6, wobei Amplitudenrauschen oder ein anderes Signal an die Vorrichtung (39) zur Messung des Signals angelegt wird, um die Meßauflösung zu verbessern.

**8.** Ein adaptiver Entzerrer nach einem der Ansprüche 1 bis 7, wobei die Komponenten des Filters (9, 35) vorkalibriert sind.

**9.** Ein Kommunikationskanal mit wenigstens einem Treiber (11) zur Übertragung eines Eingangssignals entlang des Kanals (21); wenigstens einem Empfänger (31) und einem adaptiven Entzerrer mit einem variablen Filter (9, 35) zur Modifizierung des Signals; einer Vorrichtung (39) zur Messung des empfangenen Signals; und einer Steuervorrichtung (7, 33) zur Einstellung der Parameter des Filters (9, 35), **dadurch gekennzeichnet, daß** der Entzerrer wie in einem der Ansprüche 1 bis 8 beansprucht ausgebildet ist.

**10.** Ein Kanal nach Anspruch 9, wobei die Komponenten des Filters (9, 35) sowohl in den Übertrager (11) als auch den Empfänger (31) integriert sind.

**11.** Ein Kanal nach einem der Ansprüche 9 bis 10, wobei der Chip, auf dem der Empfänger (31) angeordnet ist, Messungen an den Chip übermittelt, auf dem der Treiber (11) angeordnet ist.

**12.** Ein Kommunikationskanal nach einem der Ansprüche 9 bis 11, mit einer Mehrzahl von Empfängern (31), wobei jeder Empfänger den adaptiven Entzerrer aufweist, wobei der Filter (9) an dem Übertrager (11) so gesetzt ist, daß er eine durchschnittliche Signalverzerrung an den Empfängern kompensiert, wobei die Filter (35) in den Empfängern so gesetzt sind, daß sie die Differenz zwischen dem Durchschnittssignal an den Empfängern und dem bestimmten Signal an jedem Empfänger kompensieren.

**13.** Ein Kommunikationskanal nach einem der Ansprüche 9 bis 12, weiterhin mit einer Quelle für ein Signal, bevorzugt einem Rauschen, welches an den Empfänger (31) angelegt wird, so daß die Auflösung eines Komparators, der Spannungsmessungen durchführt, verbessert wird.

**14.** Ein Kanal nach Anspruch 13, wobei die Empfänger oder Komparatoren bezüglich der Zeit oder einer Referenzspannung einen Offset aufweisen.

**15.** Ein Verfahren zum Übertragen von Daten entlang eines Kommunikationskanals, mit wenigstens einem Treiber (11) zur Übertragung eines Signals über den Kanal (21); wenigstens einem Empfänger; und einem adaptiven Entzerrer, **dadurch gekennzeichnet, daß** der Kommunikationskanal wie in einem der Ansprüche 6 bis 14 beansprucht ausgebildet ist.

**16.** Ein Verfahren zum Entzerren der Eigenschaften eines Kommunikationssignals (20), wobei die Entzerrung durch Anwenden eines Kalibrierprozesses an den Kanal durchgeführt wird, der die folgenden Schritte aufweist:

- Treiben eines Signals in den Kanal (20);
- Anlegen einer Übertragungsfunktion eines Filters (9, 35) an das empfangene Signal, um ein gefiltertes Signal zu erzeugen;
- Messen der Breite einer Augenöffnung in dem Augendiagramm des empfangenen gefilterten Signals;
- Einstellung der Parameter der Übertragungsfunktion in dem Filter (9, 35), um das Signal basierend auf der bestimmten Breite der Augenöffnung zu modifizieren,
- **dadurch gekennzeichnet, daß** die Breite der Augenöffnung in dem Augendiagramm des empfangenen gefilterten Signals gemessen wird, indem das Signal mit einer variablen Spannung oder einem Stromschwellenwert verglichen wird.

17. Ein Verfahren nach Anspruch 16, wobei das Verfahren durchgeführt wird unter Verwendung eines adaptiven Entzerrers nach einem der Ansprüche 1 bis 8 oder eines Kommunikationskanals nach einem der Ansprüche 9 bis 14.

## Revendications

1. Égaliseur adaptatif (7, 9, 11, 31, 35, 33) comprenant un filtre variable (9, 35) pour modifier le signal, un moyen (39) pour mesurer le signal reçu et un moyen de commande (7, 33) pour ajuster les paramètres de filtre (9, 35) ; dans lequel :

   le moyen (39) pour mesurer le signal reçu détermine la largeur de l'ouverture en oeil dans le diagramme en oeil du signal reçu ; et les paramètres de filtre (9, 35) sont ajustés par le moyen de commande (7, 33) sur la base de la largeur déterminée du diagramme en oeil,

   **caractérisé en ce que** la largeur de l'ouverture en oeil dans le diagramme en oeil du signal reçu est mesurée en utilisant un moyen de balayage (37, 39) pour comparer le signal avec un seuil de tension ou de courant variable.

2. Égaliseur adaptatif selon la revendication 1, dans lequel le moyen de commande (7, 33) construit une représentation numérisée du signal reçu, les paramètres de filtre (9, 35) étant ajustés sur la base de la représentation numérisée construite.

3. Égaliseur adaptatif selon la revendication 1 ou 2, dans lequel le moyen de commande (7, 33) charge itérativement des valeurs de paramètres de filtres (9, 35) et accorde les valeurs en fonction du signal reçu pour enrouler le signal pour reconstruire le signal d'entrée.

4. Égaliseur adaptatif selon la revendication 3, dans lequel le moyen de commande (7, 33) réalise une itération en utilisant une approche Monté Carlo pour trouver une égalisation optimale.

5. Égaliseur adaptatif selon la revendication 3, dans lequel le moyen de commande (7, 33) réalise une itération en suivant le gradient de la fonction de transfert du filtre.

6. Égaliseur adaptatif selon l'une quelconque des revendications 1 à 4, dans lequel le moyen (39) pour mesurer le signal reçu prend une série d'échantillons successifs du signal reçu et sélectionne le point d'échantillon avec un taux d'erreur binaire minimal pour construire une représentation numérisée du signal reçu.

7. Égaliseur adaptatif selon l'une quelconque des revendications 1 à 6, dans lequel un bruit d'amplitude ou un autre signal est appliqué au moyen (39) pour mesurer le signal pour améliorer la résolution des mesures.

8. Égaliseur adaptatif selon l'une quelconque des revendications 1 à 7, dans lequel les composantes de filtre (9, 35) sont pré-calibrées.

9. Canal de communication comprenant au moins un dispositif de commande (11) pour transmettre un signal d'entrée le long du canal (21), au moins un récepteur (31) et un égaliseur adaptatif comprenant un filtre variable (9, 35) pour modifier le signal, un moyen (39) pour mesurer le signal reçu et un moyen de commande (7, 33) pour ajuster les paramètres de filtre (9, 35), **caractérisé en ce que** l'égaliseur est comme exposé dans l'une quelconque des revendications 1 à 8.

10. Canal selon la revendication 9, dans lequel les composantes de filtre (9, 35) sont intégrées à la fois dans l'émetteur (11) et le récepteur (31).

11. Canal selon l'une quelconque des revendications 9 et 10 dans lequel la puce sur laquelle le récepteur (31) est situé communique des mesures à la puce sur laquelle le dispositif de commande est situé.

12. Canal de communication selon l'une quelconque des revendications 1 à 11, comprenant une pluralité de récepteurs (31), chaque récepteur comprenant l'égaliseur adaptatif, dans lequel le filtre (9) sur l'émetteur (11) est réglé pour compenser la distorsion de signal moyen sur les récepteurs et les filtres (35) dans les récepteurs sont réglés pour compenser la différence entre le signal moyen sur les récepteurs et le signal particulier sur chaque récepteur.

13. Canal de communication selon l'une quelconque des revendications 9 à 12 comprenant en outre une source de signal, préférablement du bruit, qui est appliquée au récepteur (31) afin que la résolution d'un comparateur réalisant des mesures de tension soit améliorée.

14. Canal selon la revendication 13, dans lequel les récepteurs ou comparateurs sont décalés en temps ou en tension de référence.

15. Procédé d'émission de données le long d'un canal de communication comprenant au moins un dispositif de commande (11) pour émettre un signal le long du canal (21), au moins un récepteur et un égaliseur adaptatif, **caractérisé en ce que** le canal communication est comme exposé dans l'une quelconque des revendications 6 à 14.

16. Procédé pour l'égalisation des caractéristiques d'un canal de communication (20), dans lequel l'égalisation est réalisée en appliquant au canal un traitement de calibrage comprenant les étapes de :

   commande d'un signal dans le canal (20) ;
   application d'une fonction de transfert d'un filtre (9, 35) au signal reçu pour produire un signal filtré ;
   mesure de la largeur de l'ouverture en oeil dans le diagramme en oeil du signal filtré reçu ;
   ajustement des paramètres de la fonction de transfert dans le filtre (9, 35) pour modifier le signal sur la base de la largeur déterminée de l'ouverture en oeil,

   **caractérisé en ce que** la largeur de l'ouverture en oeil dans le diagramme en oeil du signal filtré reçu est mesurée en comparant le signal avec un seuil de tension ou de courant variable.

17. Procédé selon la revendication 16, dans lequel le procédé est réalisé en utilisant un égaliseur adaptatif selon l'une quelconque des revendications 1 à 8 ou un canal de communication selon l'une quelconque des revendications 9 à 14.

Fig. 1

EP 1 423 923 B1

Fig. 2

**Fig. 3**

Fig. 4

Fig. 5

Fig. 6

Fig. 7

Fig. 8a

Fig. 8b